# EUROPEAN PATENT APPLICATION

(11) **EP 2 071 964 A1**
(43) Date of publication of application: **24.06.2009**
(21) Application number: 08168252.8
(22) Date of filing: 04.11.2008
(51) Int. Cl.: A23K 1/16, A23K 1/18

(54) **Method of supplementing animals with carotenoids by drinking water**

(30) Priority: 18.12.2007 CN 200710301265
(71) Applicant: Zhejiang Medicine Co., Ltd. Xinchang Pharmaceutical Factory, Zhejiang 312500 (CN)
(72) Inventor: Xu, Xinde, Zhejiang 312500 (CN); Shao, Bin, Zhejiang 312500 (CN); Zhou, Di, Zhejiang 312500 (CN); Chen, Chunbo, Zhejiang 312500 (CN); Hong, Yimin, Zhejiang 312500 (CN)
(74) Representative: Gervasi, Gemma

(57) **Abstract**

The present invention provides a method of supplementing animals with carotenoids by drinking water, comprising the following steps of: (1) making yellow and/or red pigments into the microencapsulated dry powders or beadlets; (2) mixing the aforementioned microencapsulated dry powders or beadlets in a certain proportion and dissolving them in water to prepare for a pigment solution; (3) administering the prepared pigment solution to animals by drinking. The method of supplementing the carotenoids according to the present invention has the advantages of easy absorption, economical dosages of pigments, high efficiency of coloration, stable coloration and small effects on the process of pigments in comparison with conventional methods currently.

## Description

### FIELD OF THE INVENTION

The present invention relates to the fields of biochemistry, in particular, relates to a method of supplementing animals with carotenoids by drinking water, thereby achieve the purpose of nutrition enhancement and coloration.

### BACKGROUND OF INVENTION

The carotenoids are a kind of important substances in animal feeds, they are not only beneficial to the growth and development of animals, but also impart attractive colors to animals skin or others such as yolk. However, animals are unable to synthesize the carotenoids by themselves. They need to ingest these useful substances from outside. Besides playing important physiological roles, the carotenoids ingested into bodies may be deposited in the fat, and then to impart various beautiful colors, such as pink in salmon, cyan in lobster shell and various vivid colors in bird feathers.

Besides the function of coloration, some carotenoids also have activities of provitamin A, but only limit to 50 kinds of more than 700 kinds of carotenoids, for example, β-carotene, β-Apo-8'-carotene aldehyde etc. Besides activities of provitamin A, the carotenoids inside animal bodies are widely used as antioxidants, immunopotentiators, and light protectants etc. Furthermore, they also have the functions on reducing the gap junction intercellular communication and the viability of cancer cells.

As described above, the carotenoids display a special color by deposition in the fat of animal bodies. The depth and uniformity of yolk colors of poultry are closely related to the amount of carotenoids thereinto. Currently, there has been a special index of Roche Yolk Color Fan (RYCF) for measuring yolk colors, which divides the colors into Grades 1∼14 from light to deep depending on the depth of the colors. The poultry eggs with deep and uniform colors generally have good prices in the market. However, the requirement for yolk colors is different in different countries. For example, in northern European countries, except the Germany, the requirement is low. The index of Roche Yolk Color Fan is generally between 7 and 11. While in western and southern European countries, people like yolks with deeper color, the index of Roche Yolk Color Fan is generally Grades 11∼14. The index of Roche Yolk Color Fan is acceptable about 12-13 in some countries of south-east Asia. Besides yolk colors, the colors of skin, ankle and beak are also important factors to the consumers in China, Australia, France and Spain. The price of the meat chickens with deep-yellow and uniform skin or golden yellow ankle is usually high in the market.

The chickens and ducks in a scattered field raised by village farmers usually eat plants, insects, aquatics or algaes containing a large amount of carotenoids, thus the natural carotenoids being in these organisms will deposit in their bodies. Accordingly, the skins, ankles and beaks of the poultries in a scattered field raised by farmers generally have pleasing yellow. These yolks also have deeper yellow, and the index of Roche Yolk Color Fan reaches over Grade 12. As for those poultries in large scale feeding, as conventional diet only contains few carotenoids, it allows to supplement some yellow and red pigments available legally in the feeds in order to reach the appearance quality similar to that of those poultries raised in a scattered field.

The yellow pigments supplemented in animal feeds may be lutein and zeaxanthin in nature, which are generally supplemented through ingesting plants such as yellow maize, corn gluten meal, clover, and marigold. In addition, the yellow pigments may also be synthetic, such as β-Apo-8'-carotene aldehyde, β-Apo-8'-carotene acetate. The supplemented red pigments are generally canthaxanthin or citranaxanthin or capsanthin. At present, in the breeding industry of poultries, the marigold extract dry powder (the content of lutein is 2%, and the dry powder is obtained from the mixture of marigold extract with carriers such as starch) and the microencapsulated dry powders of synthetic canthaxanthin (the content of effective component is 10%) are used as sources of yellow and red pigments in feeds respectively, thereby to impart ideal golden yellow to the skin or ankles or yolks of the poultries.

The amounts of yellow and red pigments added in feeds are different. Red pigments such as canthaxanthin have relatively high coloration efficiency compared with yellow pigments such as lutein and zeaxanthin. Therefore, the coloration process of poultries, especially meat poultries generally comprises two stages, the first stage is to assure the basements to be yellow and then on the basis of the basements the colors are deepened according to the requirements. The coloration stage is referred to as the saturation stage, which achieves the object of deepening the yellow by adding yellow pigments. The optimum method of achieving the object is to employ the combination of maize, corn gluten meal and others such as luteins. The second stage is referred to as the hyperchromic stage, the color and luster are enhanced by adding red pigments on the yellow basements, in the meanwhile, it makes sure the color does not fade and the luster is more uniform. After the second stage, the color of the skins and ankles of poultries will change into golden yellow-orange red from yellow. Throughout the whole stage, the ratio of yellow and red pigments added is between 3:1 and 4:1 in order to obtain the best coloration effect.

As described above, in the process of feeding animal, a large amount of yellow and red pigments are added into the daily feeds. In the current feed industry, the yellow pigments as additives are mainly extracts of marigold and added into feeds in the form of adsorption-type dry powder, wherein the content of lutein is about 2%, which is a lower content of powder obtained from the mixture of lutein extracted by marigold and carriers such as starch.

The application of the adsorption-type dry powders will bring about some problems as follows: firstly, the crystal of lutein is only adsorbed to the carriers without embedding protection sufficiently, so the products have poor stability and large consumption in the course of feed processing and storage; secondly, carotenoids as the effective components in the pigments exist in the form of crystal, which may lead to a lower bioavailability in animal bodies, thereby to cause indirectly larger consumption.

On the other hand, the feeding of yellow and red pigments through adding it to feeds brings about some uncontrollable factors because of longer time feeding, this is because it is largely influenced by other factors such as levels of carotenoids, levels of vitamin A, contamination of mycotoxins, coccidiosis, variabilities of raw materials, effects of drugs, conversion rates of feeds, and levels of vitamin E. The coloration effect varies in a large range even at the same levels of pigments. This means that the coloration is easy to be failure. It is very difficult to solve the problem in the breeding industry of poultries.

### SUMMARY OF THE INVENTION

To overcome the problems described above, the present invention provides a method for supplementing animals with carotenoids by drinking water, comprising the following steps:
(1) making yellow and/or red pigments into the microencapsulated dry powders or beadlets;
(2) mixing the aforementioned microencapsulated dry powders or beadlets in a certain proportion and dissolving them in water to prepare for a pigment solution;
(3) administering the prepared pigment solution to animals by drinking.

Wherein the yellow pigment comprises at least one selected from the group consisting of β-apo-8'-carotene aldehyde, β-apo-8'-carotene acetate, lutein and zeaxanthin; the red pigment comprises at least one selected from the group consisting of canthaxanthin, citranaxanthin, and capsanthin.

Wherein the yellow pigment is synthetic or natural; and the natural yellow pigment comprises lutein and zeaxanthin extracted from the marigold.

Wherein the weight ratio of the effective component of the yellow to red pigments mixed is 6:1 to 0.1:1.

Wherein the content of the effective component of carotenoids in the microencapsulated dry powders or beadlets is 5 to 25% (w/w).

Wherein the pigment solution is cold-water soluble or warm-water soluble, and the concentration of carotenoids in the pigment solution is 30 mg/kg ∼ 400 mg/kg.

Wherein the temperature of the warm water is 20∼60 °C and the temperature of the cold water is the usual atmosphere temperature, typically 5°C∼ 25°C.

Wherein the prepared pigment solution is administered to animals for drinking, the meat poultry starts drinking it at 3 to 10 days before going into the market.

Wherein the prepared pigment solution is administered to animals for drinking, the meat poultry starts drinking it at 5 to 7 days before going into the market.

Wherein the prepared pigment solution is administered to animals for drinking, the eggs poultry starts drinking it at 2 to 7 days before going into the market.

Wherein the prepared pigment solution is administered to animals for drinking, the eggs poultry starts drinking it at 3 to 5 days before going into the market.

Wherein supplementing animals with carotenoids by drinking water may be applied to remedial coloration when colorations of poultries by conventional method is failure.

In particular, the present invention provides carotenoids in form of cold-water or warm-water soluble formulation. The temperature of warm water is about 20∼60°C, while the temperature of cold water is about 5°C∼25°C. Wherein the yellow and red pigments are mixed in a certain proportion. These carotenoids are supplied to animals every day by drinking water, in which the carotenoids are dissolved in water, at 3 to 10 days before going into the market. It makes skins, ankles and beaks of the meat poultry have the ideal color of golden yellow before going into the market; alternately, as for the layer hens and ducks, their color of yolks become deeper yellow and the index of RYCF reaches about 10 ∼13 after they are supplied with the carotenoids by drinking everyday for 3 to 5 days.

In comparison with the current conventional methods, the method of supplementing the carotenoids inside animal bodies according to the present invention has the advantages of: (1) easy to be absorpted, (2) economical dosages of pigments, (3) high efficiency of coloration, (4) stable coloration, and (5) less damnification on pigments during processing.

In conventional methods, different amounts of yellow and red pigments are required to supplement uninterruptedly throughout the whole growth course of poultry. Relatively large parts of pigments are not absorbed and not utilized because of the crystal state of pigments, or even absorbed but discharged directly without depositing in the fat, or deposited for the long time and decomposed because of organism metabolism. All of these lead to a large consumption of carotenoids and a low coloration efficiency.

It may be shown from the disclosure of the present invention as follows that:
(1) The used carotenoids embedded with microcapsules are easier to be absorbed and utilized because the effective components are present in an amorphous state and have the high bioavailability in organisms.
(2) More important, the time of supplementing the pigments to animal bodies is short. Ideal color may be obtained when the supplement starts at one week before going into the market. And the amount of the used pigments is largely decreased.
(3) Animal comparative experiments indicate that the amount of pigments used is only about 1/3∼1/4 of that of conventional methods to achieve the same coloration effects, and the coloration efficiency is largely improved.
(4) The coloration is stable. There are lots of uncontrolled factors when supplementing the carotenoids according to the conventional methods. The nutritional status of feeds and the health status of the organism per se may affect the final coloration effect. However, when employing the method of the present invention, the coloration path is shorter, thereby to greatly decrease influences of uncontrolled factors and make the coloration effect stable. Furthermore, the method can be applied in remedial colorations of the poultry after the failure of coloration according to conventional methods.
(5) The loss of active component is less in the course of pigments processing. In conventional methods, specifically, when lutein is adsorbed to the carriers such as starch in the form of crystal, these catrotenoids are quite not stable and easy to lose because of the influences of light, heat, oxygen as well as processing. However, according to the method of the present invention, the carotenoids have good stability because of good embedded microcapsules, and have no additional effects of processing, thereby it leads to less consumption. The relative advantages described above impart the innovation and industrial prospect to the present patent.

The present invention describes a method of supplementing animals with carotenoids by drinking water. That is, the high content of purified carotenoids, wherein the total content of carotenoids is more than 60%, can be obtained from the saponification and purification of marigolds oleoresin. The high content of carotenoids is then embedded by the technique of microcapsule, thereby to obtain a certain amount of cold-water soluble or warm-water soluble dry powders. After mixing with the cold-water soluble or warm-water soluble microencapsulated canthaxanthin particulates in a certain proportion, the mixed powder are directly dissolved in water for animals drinking at 3 to 10 days before going into the market, thereby to achieve the purpose of supplementing the carotenoids. Compared with conventional methods, which the carotenoids is ingested through eating the daily feed after the carotenoids are added into the feed through a series of processing, the method of the present invention has high coloration efficiency, short coloration time and economical dosages of pigments. Furthermore, the method does not need any processing to reduce the unnecessary consumption of carotenoids.

The present method provides a method of supplementing the carotenoids inside animal bodies by drinking water for the purpose of nutrition enhancement and coloration. The adsorption-type dry powders of conventional methods are replaced by the microencapsulated particulates of yellow pigments such as lutein with the good stability and easy absorption and utilization of the present method, in order to avoid the loss of pigments in the course of feed processing. These yellow pigments are mixed with red pigments such as canthaxanthin in a certain proportion and dissolved in water to prepare a certain concentration of solution. The purpose of coloration can be achieved after the animals drink continuously the pigment solution for 3 to 10 days, and the coloration is uniform.

The detailed description of the present invention is as follows:

Dry powders of yellow pigments in certain contents are obtained through the microcapsule techniques. The yellow pigments can be either synthetic such as β-apo-8'-carotene aldehyde, and β-apo-8'-carotene acetate, or natural such as lutein and zeaxanthin from marigold oleoresin. The lutein and zeaxanthin from the nature may be extracted and purified to get a purity of more than 60%.

The red pigments used in the method may be canthaxanthin or citranaxanthin or capsanthin, and may also be applied in the form of microcapsule, wherein the content of the active components is between 5 and 25% (w/w). The microencapsulated dry powders and particulates may be cold-water soluble or warm-water soluble.

The microencapsulated dry powders or beadlets of yellow and red pigments are mixed, wherein the ratio of the two kinds of active components as yellow to red pigments is between 6:1 and 0.1:1 depending on the practical feeding requirements. Alternatively, the yellow and red pigments may be premixed uniformly according to a ratio to obtain the mixed carotenoid crystals, and then the crystals mixture is prepared by the microcapsule techniques to obtain the dry powders or beadlets including yellow and red pigments.

Dissolving the mixture of dry powders or particulates of yellow and red pigments or the dry powders or particulates of the mixture of yellow or red pigments above in water, and the total concentration of carotenoids thereinto is between 30 mg/kg and 400 mg/kg. As for the cold-water soluble dry powders or beadlets, the dry powders or beadlets may be firstly dissolved in a little cold water and then diluted to obtain the desired concentration. As for the warm-water soluble dry powders or beadlets, the dry powders or particulates may be dissolved in a little warm water and then diluted with enough cold water to obtain the desired concentration.

The prepared pigment solution is fed to animals for drinking. For the meat poultry, the feed is generally started at 3∼10 days, preferably 5∼7 days before going into the market, thereby to make sure obtain the good coloration effect when going into the market. As for the egg poultry, the color of yolk may reach the ideal yellow after drinking continuously the pigment solution for 3∼5 days.

When feeding according to conventional methods, the amount of red and yellow pigments used are respectively above 20∼80 mg and 100∼200 mg, while the amount of red and yellow pigments according to the present invention's method are respectively 10∼20 mg and 20∼50 mg.

Compared with conventional feeding methods, the amount of pigments according to the present invention's method is decreased by 1/10∼9/10, even by 2/3∼3/4 to achieve the same coloration effect, the bioavailability of pigments by animals is largely improved and the amount of pigments used saves a lot. Moreover, the method of the present invention can be applied in the remedial coloration after failure to color according to conventional methods.

The advantages of the method according to the present invention will be represented by the following embodiments.

### DETAILED DESCRIPTION OF THE PRESENT INVENTION AND PREFERRED EMBODIMENTS THEREOF

The features of the present invention will be more clearly understood by reference to the following embodiments, which are not to be construed as limiting the present invention.

### Example 1

8900 Three-Yellow chickens from a chicken farm, are fed with Zhenong Tai long^{®} feed according to conventional methods, in which enough red (10% Carophyll^{®} Red) and yellow pigments (2% lutein dry powder) are added to the feeds. However, after 45 days of aborative feeding, the results show that the meat chickens have bad coloration effect, irregular coloration degree, the highest index of RYCF for the ankle of 13, the lowest index of 6 and the average index of 7.4, universally somewhat low coloration degree and with comparatively big color difference. Furthermore, it may be found through investigation that the meat chickens have dry feathers, pale and colorless skins, low spirits and the respiratory disease symptoms.

The pigments are supplemented by drinking water to carry out the remedial coloration from the beginning of the 46th day. 10% warm-water soluble lutein beadlets are mixed with LALI^{®} Red (that is, 10% canthaxanthin particulates), wherein the proportion of the two active components is about 1:1. 360g of the mixed particulates are dissolved in 3kg warm water at a temperature of 40 every day. After dissolution by stirring, 600 kilograms water is added thereinto and mixed uniformly for drinking of 8900 chickens for one day. In the solution, the concentration of lutein and canthaxanthin are respectively about 30mg/kg. After 4 days of continuous drinking, the skin color of the meat chickens is improved remarkably. The ankles are with the lowest index of Roche Yolk Color Fan of 10, the highest index of 14 and the average index of 12. Moreover, the chickens have increased the feed intake and have high spirits, luster skin. Further, the weights grow remarkably, with the average weight growing from the original 1.35kg till 1.75kg, and the respiratory disease symptom has almost recovered.

Comparing with the prior and latter drinking, it may be seen that the most remarkable advantages of supplementing the carotenoids by drinking water are very strong coloration effects, and have significant effects in short time, and have the positive actions on alleviating the disease symptom of the meat chickens, promoting the feed intake and increasing the weight.

### Example 2

700 Sichuan brown chickens from a chicken farm, are fed till 25 days old according to conventional methods, but no any extra red and yellow pigment is added in the feed. At 25 days old, the average index of Roche Yolk Color Fan of the chicken skin is about 5.5. The pigments inside the body of the meat chickens are supplemented by drinking water from the 26th day. 5% lutein microencapsulated dry powders (cold-water soluble) and 15% canthaxanthin beadlets (cold-water-soluble) are mixed according to the proportion of 6:1 (wherein the proportion of the effective component is about 2:1). 65g of the mixed particulates are dissolved in 0.5kg cold water every day. After dissolution by stirring, 175 kilograms water is added thereinto to dilute for 700 brown chickens to drink. By the way of supplementing the carotenoids, after 7 days, the average Roche Yolk Color Fan of the meat chicken skin reaches about 11.0 and the color is uniform. The level of different coloration of different chickens is small. Thus, the necessary intake of yellow and red pigments by each chicken are respectively 27.8mg and 13.9mg in order to achieve the ideal coloration effect. Furthermore, the coloration time is shorten and it only needs to start at 7 days before going into the market.

### Example 3

400 mature caged laying hens from egg-laying hen farms are divided into two groups, 200 in each group. The laying hens from one group are fed according to the conventional method. In the daily feed, β-Apo-8'-carotene acetate and citranaxanthin with the concentration of 15mg/kg and 80mg/kg are added respectively. After 5 days of continuous feeding, the Roche Yolk Color Fan of the egg-yolk is Grade 12, but sometimes the color of the egg-yolk is different.

The laying hens are colored by drinking water in another experimental group. The used carotenoid is the microencapsulated beadlets of the mixture of β-Apo-8'-carotene acetate and citranaxanthin, wherein the total amount of the carotenoid is about 11%, the proportion of β-Apo-8'-carotene acetate and citranaxanthin is about 0.1:1. The carotenoid microencapsulated beadlets are dissolved in the water and prepared into a solution with the concentration of 30mg/kg to administer the laying hens for drinking. After 3 days, the color of the egg-yolk stays golden red with the Roche Yolk Color Fan of Grade-13, and the coloration is uniform. The color of the egg-yolk will not fade away after being cooked.

### Examples 4∼8

The same brown chickens of Example 2 or the laying hens of Example 3 are supplemented with yellow and red pigments according to the similar feeding method, wherein the component, proportion, feeding method as well as coloration effect of the corresponding yellow and red pigments are listed in Table 1:

**Table 1: Testing Conditions and Effects of Examples 4∼8**

| | **Example 4** | **Example 5** | **Example 6** | **Example 7** | **Example 8** |
|---|---|---|---|---|---|
| **Subjects** | 800 Sichuan brown chickens | 700 Three-Yellow chickens | 700 Sichuan brown chickens | laying hens | laying hens |
| **Type of Red Pigments** | 15% canthaxanthin particulates (warm-water soluble with a temperature of 40°C) | 5% capsanthin dry powders (cold-water soluble with a temperature of 10 ) and 10% citranaxanthin (warm-water soluble with a temperature of 25 ), wherein the proportion of the effective component is 1:1 | 5% capsanthin dry powders (cold-water soluble with a temperature of 20 ) and 10% canthaxanthin (warm-water soluble with a temperature of 60 ), wherein the proportion of the effective component is 1:2 | 5% capsanthin dry powders (cold-water soluble with a temperature of 5 ) | 5% canthazanthiu dry powders (cold-water soluble with a temperature of 25 ) |
| **Type of Yellow Pigments** | 15% lutein and zeaxanthin particulates (warm-water soluble with a temperature of 40°C), wherein the proportion of the effective component is 1:3 | 10% β-Apo-8'-carotene aldehyde particulates (warm-water soluble with a temperature of 60 ) | 5% zeaxanthin particulates (warm-water soluble) and 10% β-Apo-8'-carotene acetate particulates (warm-water soluble with a temperature of 25 ), wherein the proportion of the effective component is 2:1 | 10% xanthophyll particulates (cold-water-soluble) and 10% β-Apo-8'-carotene acetate particulates (warm-water soluble with a temperature of 40 ), wherein the proportion of the effective component is 1:1 | 10% zeaxanthin particulates (cold-water soluble with a temperature of 10 ) |
| **Proportion of yellow and red pigments** | 1:1 | 1:5 | 1:1 | 3:1 | 6:1 |
| **Concentration of total carotenoids in drinking water** | 200ppm | 400ppm | 320ppm | 50ppm | 30ppm |
| **Feeding time(days)** | 3 | 10 | 5 | 2 | 7 |
| **Raising Effects** | The average index of Roche Yolk Color Fan of the meat chicken skin reaches 11.0 and the color is uniform. The color difference of different chickens is small. | The average index of Roche Yolk Color Fan of the meat chicken skin reaches 12.5. The ankle, claw and beak of the chicken are golden yellow and the color is uniform. | The average index of Roche Yolk Color Fan of the meat chicken skin is 12.0. The ankle, claw and beak of the chicken are bright yellow and the color difference among different chickens is small. | The Roche Yolk Color Fan of the egg-yolk stays at Grade-12 (golden red). The color is uniform and permanent. | The Roche Yolk Color Pan of the egg-yolk stays at Grade-13 (golden red). The color is uniform. The color will not fade away after being cooked. |

### Comparative Example 1

700 Sichuan brown chickens from another group of the chicken farm in Example 2, are fed according to conventional methods, that is, 2% lutein adsorption-type dry powders (2.0kg/ton) are added into the small chicken feeds. After 25 days old, 2% lutein adsorption-type dry powders (the added amount is still 2.0kg/ton) and 20% canthaxanthin beadlets (55g/ton) are added into the middle chicken feed. After another 15 days of feeding, the chicken is slaughtered. The average index of Roche Yolk Color Fan of the meat chicken's skin is 10.5. Different chickens have color difference. On the basis of a proportion of the ingestion quantity of dry feeds to that of drinking water for the meat poultry is one to two, it may be seen that the consumptions of total lutein and canthaxanthin are respectively about 120mg and 26.8mg according to conventional methods, which are 4.3 times and 2 times as much as those when supplementing the carotenoids by drinking water.

From the aforementioned comparative example, it can be seen that supplementing the carotenoids by drinking water reduces costs of coloration and increases efficiencies of coloration of the meat chickens.

Although the present invention has been described in connection with the above embodiments, it should be understood that the present invention is not limited to such preferred embodiments and procedures set forth above. The embodiments and procedures were chosen and described in order to best explain the principles of the invention and its practical application, to thereby enable others skilled in the art to best utilize the invention. It will be apparent to those skilled in the art that various substitution, modifications and changes may be thereto without departing from the scope and spirit of the invention. Therefore, the intention is intended to cover all alternative constructions and equivalents falling within the spirit and scope of the invention as defined only by the appended claims and equivalents thereto.

## Claims

1. A method for supplementing animals with carotenoids by drinking water, comprising the following steps:
(1) making yellow and/or red pigments into the microencapsulated dry powders or beadlets;
(2) mixing the aforementioned microencapsulated dry powders or beadlets in a certain proportion and dissolving them in water to prepare for a pigment solution;
(3) administering the prepared pigment solution to animals by drinking.

2. The method according to the claim 1, wherein the yellow pigment comprises at least one selected from the group consisting of β-apo-8'-carotene aldehyde, β-apo-8'-carotene acetate, lutein and zeaxanthin; the red pigment comprises at least one selected from the group consisting of canthaxanthin, citranaxanthin, and capsanthin.

3. The method according to the claim 2, wherein the yellow pigment is synthetic or natural; and the natural yellow pigment comprises lutein and zeaxanthin extracted from the marigold.

4. The method according to the claim 2, wherein the weight ratio of the effective component of the yellow to red pigments mixed is 6:1 1 to 0.1:1.

5. The method according to the claim 1, wherein the content of the active component of carotenoids in the microencapsulated dry powders or beadlets is 5-25% (w/w).

6. The method according to the claim 1, wherein the pigment microcapsules powder or bealets are cold-water soluble or warm-water soluble, and the concentration of carotenoids in the pigment solution is 30 mg/kg ∼ 400 mg/kg after dissolving in water.

7. The method according to the claim 6, wherein the temperature of the warm water is 20∼60°C and the temperature of the cold water is the usual atmosphere temperature, typically 5°C∼25°C.

8. The method according to the claim 1, wherein the prepared pigment solution is administered to animals for drinking, the meat poultry starts drinking it at 3∼10 days before going into the market.

9. The method according to the claim 1, wherein the prepared pigment solution is administered to animals for drinking, the meat poultry starts drinking it at 5∼7 days before going into the market.

10. The method according to the claim 1, wherein the prepared pigment solution is administered to animals for drinking, the eggs poultry starts drinking it at 2∼7 days before going into the market.

11. The method according to the claim 10, wherein the prepared pigment solution is administered to animals for drinking, the eggs poultry starts drinking it at 3 -5 days before going into the market.

12. The method according to the claim 1, wherein supplement of carotenoids in animals by drinking may be applied to remedial coloration when colorations of poultries by conventional methods is failure.
